# FASCICULE DE BREVET EUROPEEN

(11) **EP 0 859 439 B1**
(45) Date de publication et mention de la délivrance du brevet: **29.05.2002**
(21) Numéro de dépôt: 98400297.2
(22) Date de dépôt: 10.02.1998
(51) Int. Cl.: H02B 1/32, H02B 1/42

(54) **Châssis de support, notamment pour appareillage électrique, et montant et traverse propres à la constitution d'un tel châssis de support**
Befestigungsgestell insbesondere für elektrische Geräte, Pfosten und Riegel dafür
Support chassis in particular for electrical apparatus, upright and cross member therefor

(30) Priorité: 13.02.1997 FR 9701688
(43) Date de publication de la demande: 19.08.1998
(73) Titulaire: LEGRAND, F-87000 Limoges (FR); LEGRAND SNC, F-87000 Limoges (FR)
(72) Inventeur: Sigaut, Jean-Claude, 06580 Begomas (FR); Combas, Christian, 87240 Ambazac (FR)
(74) Mandataire: CABINET BONNET-THIRION

(56) Documents cités:
- EP-A- 0 691 718
- DE-U- 1 911 581
- DE-U- 9 412 479

## Description

La présente invention concerne d'une manière générale les châssis de support comportant, à la manière d'une échelle, deux montants et au moins deux traverses.

Ces châssis de support sont destinés à recevoir, par leurs traverses, un quelconque appareillage, formé par exemple d'appareils électriques modulaires.

Ils relèvent, de ce fait, de l'équipement, ou de la constitution, de quelconques coffrets ou tableaux propres au logement ou à la présentation d'un tel appareillage.

Ils sont alors généralement fixés à la surface de support sur laquelle un tel coffret ou tableau est lui-même rapporté.

Il s'agit par exemple d'un mur.

Pour minimiser les coûts de fabrication d'un tel châssis de support, il est usuel de ne prévoir qu'un seul moyen de fixation, le plus souvent une vis, à l'extrémité de chacune des traverses, pour l'assujettissement de cette traverse au montant correspondant.

Il en résulte que, avant sa fixation à la surface de support sur laquelle il doit être rapporté, ce châssis de support ne présente qu'une rigidité relativement médiocre, notamment à l'égard des moments fléchissants.

Bien entendu, cette rigidité se trouve parfaitement affermie une fois la fixation faite à la surface de support.

Mais, dans l'intervalle, le manque relatif de rigidité peut être défavorablement perçu par l'utilisateur.

Un chassis de support selon l'art antérieur est connu par example du document DE-U-1 911 581.

La présente invention a d'une manière générale pour objet une disposition permettant avantageusement d'améliorer de façon sensible, bien que de manière très simple, cette rigidité.

De manière plus précise, elle a tout d'abord pour objet un châssis de support, notamment pour appareillage électrique, du genre comportant deux montants et au moins deux traverses dont chacune est assujettie à chacun des montants par un moyen de fixation, ce châssis de support étant d'une manière générale caractérisé en ce que, pour l'un au moins des montants, et, préférentiellement, pour chacun de ceux-ci, le moyen de fixation de l'une au moins des traverses est décalé longitudinalement, suivant cette traverse, par rapport au moyen de fixation de l'une au moins des autres traverses ; elle à encore pour objet tout montant et toute traverse propres à la constitution d'un tel châssis de support.

Par exemple, suivant une forme de mise en oeuvre possible de l'invention, les moyens de fixation des traverses sont, pour un même montant, alternativement décalés, dans un sens et dans l'autre, l'un par rapport à l'autre, d'une des traverses à l'autre.

Autrement dit, au lieu d'être alignés sur ce montant, les moyens de fixation des traverses sont implantés suivant une ligne brisée, et, plus précisément, suivant une ligne brisée en zigzag.

Il en résulte, avantageusement, de manière assez surprenante, à matière égale, et, notamment, à nombre de moyens de fixation mis en oeuvre égal, une amélioration notable de la rigidité de l'ensemble.

En pratique, et les autres conditions étant égales par ailleurs, cette rigidité peut se trouver accrue de 30 %.

Il en résulte, pour l'utilisateur, une meilleure perception de la qualité du châssis de support.

Les caractéristiques et avantages de l'invention ressortiront d'ailleurs de la description qui va suivre, à titre d'exemple, en référence aux dessins schématiques annexés sur lesquels :
la figure 1 est une vue en élévation de face d'un châssis de support suivant l'invention ;
la figure 2 en est, à échelle supérieure, et en partie éclatée, une vue partielle en perspective ;
la figure 3 reprend, à échelle encore supérieure, le détail de la figure 2 qui, repéré par un encart III sur cette figure 2, est relatif à l'un des montants que comporte ce châssis de support ;
la figure 4 est une vue partielle en coupe transversale d'un des plots que comporte ce montant, suivant la ligne IV-IV de la figure 3 ;
la figure 5 en est une vue partielle en coupe longitudinale, suivant la ligne V-V de la figure 3 ;
la figure 6 est, à l'échelle des figures 4 et 5, et suivant la ligne VI-VI de la figure 2, une vue partielle en coupe transversale d'une des traverses que comporte également le châssis de support suivant l'invention ;
la figure 7 est, à l'échelle de la figure 6, une vue partielle en coupe longitudinale de cette traverse, suivant la ligne VII-VII de la figure 2 ;
la figure 8 est une vue partielle en perspective, qui, analogue à celle de la figure 3, concerne une variante de réalisation ;
la figure 9 est une vue partielle en coupe transversale de cette variante de réalisation, suivant la ligne IX-IX de la figure 8.

Tel qu'illustré sur ces figures, et de manière connue en soi, le châssis de support 10 suivant l'invention comporte, globalement, deux montants 11 et au moins deux traverses 12 dont chacune est assujettie à chacun des montants 11 par un moyen de fixation 13.

Par mesure de simplicité et d'économie, tant en ce qui concerne la fabrication qu'en ce qui concerne le montage, il n'est prévu qu'un seul moyen de fixation 13 à chacune des extrémités de chacune des traverses 12.

Il s'agit par exemple d'une vis, tel que représenté.

Dans la forme de réalisation représentée, les montants 11, qui sont globalement rectilignes, sont parallèles entre eux, et les traverses 12, qui sont elles-mêmes globalement rectilignes, leur sont perpendiculaires.

Par exemple, et tel que représenté, le nombre de traverses 12 est supérieur à deux.

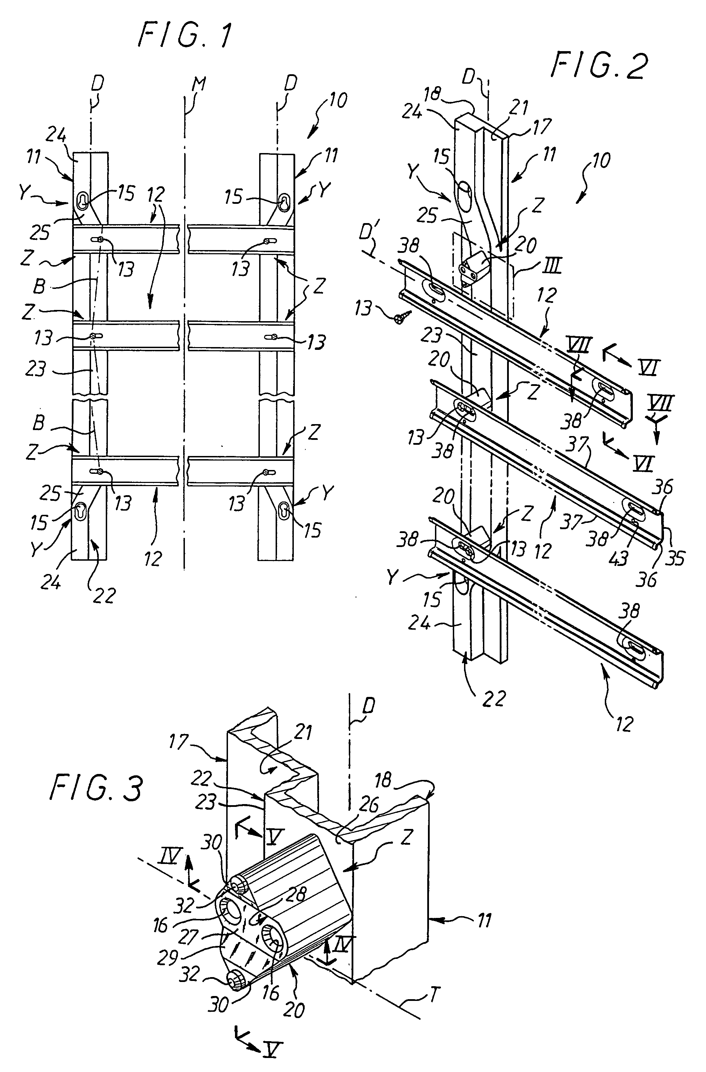

C'est la raison pour laquelle, sur les figures 1 et 2, les montants 11 ont été localement interrompus.

Préférentiellement, mais non nécessairement obligatoirement, les diverses traverses 12 sont établies à un pas régulier.

Leur longueur est indifférente, et c'est la raison pour laquelle elles ont elles aussi été localement interrompues sur les figures 1 et 2.

Suivant l'invention, pour l'un au moins des montants 11, et, en pratique, pour chacun de ceux-ci, le moyen de fixation 13 de l'une au moins des traverses 12, et, en pratique, celui de chacune de celles-ci, est décalé longitudinalement, suivant une telle traverse 12, par rapport au moyen de fixation 13 de l'une au moins des autres traverses 12.

Soit D, tel que schématisé en traits interrompus sur les figures 1, 2 et 3, la direction générale d'allongement des montants 11.

Préférentiellement, et tel que représenté, pour un même montant 11, les moyens de fixation 13 des traverses 12 sont alternativement décalés, longitudinalement, suivant les traverses 12, dans un sens et dans l'autre, l'un par rapport à l'autre, d'une traverse 12 à l'autre.

Autrement dit, au lieu d'être alignés, et tel que schématisé en traits interrompus sur la figure 1, ces moyens de fixation 13 se situent sur une ligne brisée B, qui, formée de tronçons qui sont alternativement inclinés dans un sens et dans l'autre par rapport à la direction d'allongement D des montants 11, est globalement en zigzag.

Pour une même traverse 12, les moyens de fixation 13, c'est-à-dire les deux moyens de fixation 13 intervenant chacun respectivement aux deux extrémités de cette traverse 12, sont implantés de manière symétrique l'un de l'autre par rapport au plan médian M de l'ensemble qui, tel que schématisé en traits interrompus sur la figure 1, est perpendiculaire aux traverses 12.

Dans la forme de réalisation représentée, les deux montants 11 ont une même longueur, et ils sont symétriques l'un de l'autre par rapport au plan médian M de l'ensemble.

Pour permettre la fixation du châssis de support 10 sur un quelconque support, et, par exemple, sur une quelconque surface de support, chacun des montants 11 présente, au voisinage de chacune de ses extrémités, un perçage 15, qui, dans la forme de réalisation représentée, est en trou de serrure.

Pour des raisons qui apparaîtront ci-après, ce perçage 15 s'étend le long du bord externe des montants 11.

Soit Y la zone de fixation correspondante d'un montant 11.

Suivant l'invention, pour chaque zone de fixation Z d'une traverse 12, chacun des montants 11 comporte, en attente, deux perçages 16, qui sont chacun propres à recevoir un moyen de fixation 13, et qui sont alignés l'un avec l'autre suivant une transversale T à un tel montant 11, c'est-à-dire suivant une perpendiculaire à sa direction d'allongement D, figure 3.

Dans la forme de réalisation représentée, chacun des montants 11 comporte une semelle 17, dont la surface arrière 18 est globalement plane, et, pour chaque zone de fixation Z d'une traverse 12, un plot 20, qui fait globalement saillie sur la semelle 17, sur la surface avant 21 de celle-ci, et en bout duquel interviennent les deux perçages 16 correspondants.

Les divers plots 20 que porte ainsi un montant 11 sont alignés parallèlement à sa direction d'allongement D.

Dans la forme de réalisation représentée, ces divers plots 20 s'étendent, plus précisément, le long du bord interne des montants 11.

Plus précisément, encore, dans cette forme de réalisation, les divers plots 20 que porte un montant 11 font saillie sur une nervure 22 qui fait elle-même saillie sur sa semelle 17.

Cette nervure 22 présente, dans la forme de réalisation représentée, un tronçon médian 23, qui s'étend le long du bord interne d'un montant 11 et porte les divers plots 20 de ce montant 11, et deux tronçons d'extrémité 24, qui s'étendent le long du bord externe de celui-ci, en étant chacun respectivement affectés du perçage 15 correspondant du montant 11, et qui sont chacun respectivement reliés en continu au tronçon médian 23 par un tronçon de raccordement 25.

Par exemple, et tel que représenté, pour chaque tronçon d'extrémité 24, le tronçon de raccordement 25 s'étend en oblique par rapport à la direction d'allongement D.

En pratique, les divers tronçons 23, 24 et 25 de la nervure 22 sont rectilignes.

Dans la forme de réalisation représentée, les flancs latéraux de cette nervure 22 sont droits, en s'étendant perpendiculairement à la surface arrière 18 de la semelle 17, et, comme la surface avant 21 de celle-ci, sa surface supérieure 26 est parallèle à cette surface arrière 18.

Mais, si désiré, les arêtes de la nervure 22 peuvent être, çà et là, largement abattues par des chanfreins, notamment entre les plots 20.

Dans la forme de réalisation représentée, le contour extérieur hors tout d'un plot 20 est, en plan, en forme de losange, avec une diagonale parallèle à la direction d'allongement D du montant 11 et une diagonale perpendiculaire à cette direction d'allongement D.

Préférentiellement, ce contour extérieur hors tout est, en plan, sensiblement contenu dans le contour extérieur hors tout de la nervure 22, tout en pouvant légèrement déborder sur ce dernier aux extrémités de sa diagonale perpendiculaire à la direction d'allongement D.

L'emprise des plots 20 sous les traverses 12 se trouve ainsi avantageusement minimisée, tant entre les montants 11 qu'à l'extérieur de ceux-ci, ce qui dégage au mieux le volume disponible pour le passage des conducteurs électriques nécessaires au câblage des appareils électriques concernés.

Préférentiellement, et cela est le cas dans la forme de réalisation représentée, chacun des montants 11 comporte, pour chaque zone de fixation Z d'une traverse 12, des moyens de calage qui, associés aux perçage 16 correspondants, sont propres à une indexation de la traverse 12 concernée, tant suivant la direction d'allongement D d'un tel montant 11 que perpendiculairement à cette direction d'allongement D.

Dans la forme de réalisation représentée, suivant la direction d'allongement D, les moyens de calage résultent de ce que les perçages 16 interviennent sur le fond 27 d'une gorge 28 allongée perpendiculairement à cette direction d'allongement D, figure 3.

En pratique, les flancs 29 de cette gorge 28 s'étendent en oblique par rapport au fond 27, en formant globalement un V entre eux.

Préférentiellement, et cela est le cas dans la forme de réalisation représentée, ces flancs 29 sont symétriques l'un de l'autre par rapport au plan longitudinal médian de la gorge 28.

Par exemple, et tel que représenté, l'angle du V qu'ils forment est de l'ordre de 45°.

Eu égard au contour extérieur hors tout en forme de losange des plots 20, les flancs 29 de la gorge 28 affectent chacun respectivement, latéralement, en regard l'un de l'autre, des bossages 30 qui, aux extrémités de la diagonale de ce contour extérieur hors tout parallèle à la direction d'allongement D du montant 11, font saillie à l'extrémité d'un tel plot 20.

Perpendiculairement à sa direction d'allongement D, les moyens de calage que comporte un montant 11 présentent, corollairement, au moins un ergot 32, qui, en saillie par rapport à la surface sur laquelle interviennent les perçages 16, en l'espèce le fond 27 de la gorge 28, s'étend à l'écart de l'alignement que forment ces perçages 16.

En pratique, dans la forme de réalisation représentée, deux ergots 32 sont prévus, et ces deux ergots 32, qui sont alignés parallèlement à la direction d'allongement D du montant 11, font chacun respectivement saillie sur les deux bossages 30 correspondants.

Chacun des montants 11 est, par exemple, en matière synthétique, communément dite plastique, et est réalisé par moulage.

Pour leur allégement, aussi bien que pour des raisons de commodité de moulage, les montants 11 sont donc largement évidés, tant en ce qui concerne leur semelle 17 qu'en ce qui concerne leur nervure 22 et leurs divers plots 20.

Les évidements correspondants débouchent sur la surface arrière 18 de la semelle 17.

Les perçages 16 sont donc chacun respectivement prolongés par des puits 33, pour augmenter l'emprise des moyens de fixation 13.

La nervure 22 des montants 11 contribue avantageusement à leur rigidité, et elle les renforce dans leurs zones actives, c'est-à-dire tant dans les zones de fixation Z des traverses 12 que dans leurs propres zones de fixation Y.

Ainsi qu'on le notera, il y a avantageusement, un déport transversal entre les zones de fixation Z et les zones de fixation Y.

Dans la forme de réalisation représentée, ce déport transversal se fait vers l'extérieur.

Par exemple, et tel que représenté, les traverses 12 sont, corollairement, des rails du type de ceux communément dits à profil en chapeau ou en oméga.

Ces traverses 12, qui sont en pratique métalliques, comportent, donc, chacune, une partie médiane 35 et deux ailes latérales 36, avec, le long du bord libre de ces ailes latérales 36, des retours en équerre 37 dirigés en sens opposés l'un par rapport à l'autre.

Suivant l'invention, chacune des traverses 12 est, à chacune de ses extrémités, évidée de manière à permettre le passage d'un moyen de fixation 13 suivant l'une ou l'autre de deux implantations distinctes décalées longitudinalement l'une par rapport à l'autre suivant sa longueur, c'est-à-dire suivant sa propre direction d'allongement D', tel que schématisé en traits interrompus sur la figure 2 pour l'une d'elles.

Dans la forme de réalisation représentée, chacune des traverses 12 comporte, pour ce faire, à chacune de ses extrémités, un évidement 38 allongé en boutonnière suivant sa direction d'allongement D'.

Les deux implantations possibles pour un moyen de fixation 13 se trouvent ainsi avantageusement plus proches l'une de l'autre que si des évidements distincts étaient prévus, ce qui permet avantageusement de minimiser au mieux l'emprise des plots 20 des montants 11.

Préférentiellement, et cela est le cas dans la forme de réalisation représentée, l'évidement 38 des traverses 12 est bordé par un bord tombé 39, qui fait saillie sur leur face arrière 40, et qui, sur leur face avant, permet avantageusement l'encastrement local de la tête du moyen de fixation 13 correspondant.

Par ce bord tombé 39, chacune des traverses 12 est, en outre, à chacune de ses extrémités, globalement complémentaire de la gorge 28 des plots 20 que comportent les montants 11.

Dans la forme de réalisation représentée, les flancs longitudinaux 41 du bord tombé 39 sont donc symétriques l'un de l'autre, et ils forment entre eux un V dont l'angle est de l'ordre de 45°.

Ainsi, l'un au moins des montants 11 du châssis de support 10 suivant l'invention, et, en pratique, chacun de ceux-ci, comporte, pour l'une au moins des traverses 12, et, en pratique, pour chacune de celles-ci, une gorge 28, qui est allongée perpendiculairement à sa direction d'allongement D, et avec laquelle, par le bord tombé 39 de son évidement 38, une telle traverse 12 est, localement, en prise à emboîtement, de manière complémentaire, en étant ainsi emboîtée sur un tel montant 11, et, donc, bloquée sur celui-ci.

La rigidité du châssis de support 10 suivant l'invention s'en trouve avantageusement encore accrue.

Dans la forme de réalisation représentée, le bord tombé 39 présente, tout autour de l'évidement 38, un retour 42, qui, dirigé vers l'intérieur, est parallèle aux retours en équerre 37 des ailes latérales 36.

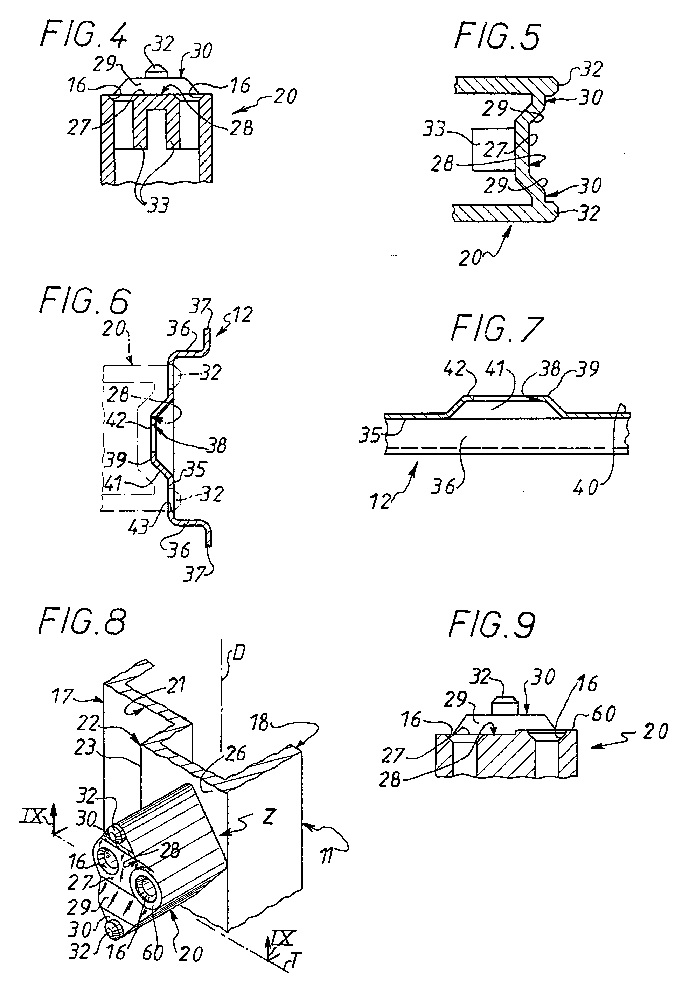

Conjointement, pour chacun des plots 20 concernés des montants 11, chacune des traverses 12 comporte, à chacune de ses extrémités, en correspondance avec les ergots 32 d'un tel plot 20, deux trous 43, qui sont disposés chacun respectivement de part et d'autre de son évidement 38, et par lesquels, tel que schématisé en traits interrompus sur la figure 6, elle peut être emboîtée sur de tels ergots 32.

Enfin, dans la variante de réalisation représentée sur les figures 8 et 9, il est prévu, localement, pour l'une au moins des zones de fixation de traverse Z, en saillie autour de l'un au moins des perçages 16 du plot 20 correspondant, un bourrelet d'appui 60.

Par exemple, et tel que représenté, ce bourrelet d'appui 60 s'étend circulairement en continu tout autour d'un tel perçage 16, à la manière d'un collet.

Lorsque, comme en l'espèce, seul l'un des perçages 16 est utilisé, à savoir celui entouré par le bourrelet d'appui 60, ce bourrelet d'appui 60 permet, avantageusement, de contrecarrer, par écrasement, une éventuelle inclinaison de la traverse 12 dont celle-ci pourrait autrement être éventuellement l'objet lors de sa fixation en raison d'un fluage de la matière constitutive du plot 20.

En effet, sous l'effort de serrage alors appliqué à la traverse 12, cet écrasement compense ce fluage, cependant que, par son évidement 38, la traverse 12 a conjointement plus ou moins tendance à s'engager sur le bourrelet d'appui 60 ainsi écrasé.

## Revendications

1. Châssis de support, notamment pour appareillage électrique, du genre comportant deux montants (11) et au moins deux traverses (12) dont chacune est assujettie à chacun des montants (11) par un moyen de fixation (13), **caractérisé en ce que**, pour l'un au moins des montants (11), le moyen de fixation (13) de l'une au moins des traverses (12) est décalé longitudinalement, suivant cette traverse (12), par rapport au moyen de fixation (13) de l'une au moins des autres traverses (12).

2. Châssis de support suivant la revendication 1, **caractérisé en ce que**, pour un même montant (11), les moyens de fixation (13) des traverses (12) sont alternativement décalés, dans un sens et dans l'autre, l'un par rapport à l'autre, d'une des traverses (12) à l'autre.

3. Châssis de support suivant l'une quelconque des revendications 1, 2, **caractérisé en ce que**, pour une même traverse (12), les moyens de fixation (13) sont implantés de manière symétrique l'un de l'autre par rapport au plan médian (M) de l'ensemble perpendiculaire aux traverses (12).

4. Châssis de support suivant l'une quelconque des revendications 1 à 3, **caractérisé en ce que**, pour l'une au moins des traverses (12), l'un au moins des montants (11) comporte une gorge (28), qui est allongée perpendiculairement à sa direction d'allongement (D), et avec laquelle une telle traverse (12) est en prise de manière complémentaire.

5. Montant d'un châssis de support suivant l'une quelconque des revendications 1 à 4, **caractérisé en ce que**, pour chaque zone de fixation (Z) d'une traverse (12), il comporte, en attente, deux perçages (16), qui sont chacun propres à recevoir un moyen de fixation (13), et qui sont alignés l'un avec l'autre suivant une transversale (T) au montant (11).

6. Montant suivant la revendication 5, **caractérisé en ce qu'**il comporte une semelle (17), et, pour chaque zone de fixation (Z) d'une traverse (12), un plot (20), qui fait globalement saillie sur la semelle (17), et en bout duquel interviennent les deux perçages (16) correspondants.

7. Montant suivant la revendication 6, **caractérisé en ce que** les divers plots (16) qu'il porte sont alignés parallèlement à sa direction d'allongement (D).

8. Montant suivant la revendication 7, **caractérisé en ce que** les divers plots (20) qu'il porte s'étendent le long de son bord interne.

9. Montant suivant l'une quelconque des revendications 6 à 8, **caractérisé en ce que** les divers plots (20) qu'il porte font saillie sur une nervure (22) qui fait elle-même saillie sur sa semelle (17).

10. Montant suivant les revendications 8 et 9, prises conjointement, **caractérisé en ce que** la nervure (22) qu'il comporte présente un tronçon médian (23), qui s'étend le long de son bord interne et porte ses divers plots (20), et deux tronçons d'extrémité (24), qui s'étendent le long de son bord externe, et qui sont chacun respectivement reliés en continu au tronçon médian (23) par un tronçon de raccordement (25).

11. Montant suivant la revendication 10, **caractérisé en ce que**, en plan, le contour extérieur hors tout d'un plot (20) est en forme de losange, avec une diagonale parallèle à la direction d'allongement (D) du montant (11) et une diagonale perpendiculaire à cette direction d'allongement (D).

12. Montant suivant la revendication 11, **caractérisé en ce que**, en plan, le contour extérieur hors tout d'un plot (20) est sensiblement contenu dans le contour extérieur hors tout de la nervure (22).

13. Montant suivant l'une quelconque des revendications 5 à 12, **caractérisé en ce que**, pour chaque zone de fixation (Z) d'une traverse (12), il comporte, associés aux perçages (16) correspondants, des moyens de calage propres à une indexation de la traverse (12) concernée, tant suivant la direction d'allongement (D) du montant (11) que perpendiculairement à cette direction d'allongement (D).

14. Montant suivant la revendication 13, **caractérisé en ce que**, suivant sa direction d'allongement (D), les moyens de calage résultent de ce que les perçages (16) interviennent sur le fond (27) d'une gorge (28).

15. Montant suivant l'une quelconque des revendications 13, 14, **caractérisé en ce que**, perpendiculairement à sa direction d'allongement (D), les moyens de calage présentent au moins un ergot (32), qui, en saillie par rapport à la surface sur laquelle interviennent les perçages (16), s'étend à l'écart de l'alignement que forment ceux-ci.

16. Montant suivant l'une quelconque des revendications 5 à 15, **caractérisé en ce que**, l'une au moins de ses zones de fixation de traverse (Z) comportant, alignés l'un avec l'autre suivant une transversale, deux perçages (16), il est prévu, au moins localement, en saillie autour de l'un au moins de ces perçages (16), un bourrelet d'appui (60).

17. Montant suivant l'une quelconque des revendications 5 à 16, **caractérisé en ce qu'**il est réalisé en matière synthétique.

18. Traverse d'un châssis de support suivant l'une quelconque des revendications 1 à 4, **caractérisée en ce que**, à chacune de ses extrémités, elle est évidée de manière à permettre le passage d'un moyen de fixation (13) suivant l'une ou l'autre de deux implantations distinctes décalées longitudinalement l'une par rapport à l'autre.

19. Traverse suivant la revendication 18, **caractérisée en ce que**, à chacune de ses extrémités, elle comporte un évidement (38) allongé en boutonnière suivant sa direction d'allongement (D').

20. Traverse suivant la revendication 19, **caractérisée en ce que** son évidement (38) est bordé par un bord tombé (39) qui fait saillie sur sa face arrière (40).

21. Traverse suivant l'une quelconque des revendications 19, 20, **caractérisée en ce que**, à chacune de ses extrémités, elle comporte deux trous (43) disposés chacun respectivement de part et d'autre de son évidement (38).

## Patentansprüche

1. Traggestell, insbesondere für elektrisches Gerät, umfassend zwei Säulen (11) und mindestens zwei Querträger (12), von denen jeder an jeder Säule (11) durch ein Befestigungsmittel (13) befestigt ist, **dadurch gekennzeichnet, dass** bei mindestens einer Säule (11) das Befestigungsmittel (13) mindestens eines Querträgers (12) in Längsrichtung dieses Querträgers (12) in Bezug auf das Befestigungsmittel (13) mindestens eines anderen Querträgers (12) versetzt ist.

2. Traggestell nach Anspruch 1, **dadurch gekennzeichnet, dass** die Befestigungsmittel (13) der Querträger (12) bei ein und derselben Säule (11) von einem Querträger (12) zum anderen abwechselnd in einer Richtung und in der anderen gegeneinander versetzt sind.

3. Traggestell nach einem der Ansprüche 1, 2, **dadurch gekennzeichnet, dass** die Befestigungsmittel (13) bei ein und demselben Querträger (12) bezüglich der zu den Querträgern (12) senkrechten Mittelebene (M) der Anordnung zueinander symmetrisch angeordnet sind.

4. Traggestell nach einem der Ansprüche 1 bis 3, **dadurch gekennzeichnet, dass** bei mindestens einem der Querträger (12) mindestens eine der Säulen (11) eine Nut (28) aufweist, die senkrecht zur Längserstreckung (D) der Säule langgestreckt ist und mit der ein solcher Querträger (12) auf komplementäre Weise in Eingriff steht.

5. Säule eines Traggestells nach einem der Ansprüche 1 bis 4, **dadurch gekennzeichnet, dass** sie bei jeder Befestigungszone (Z) eines Querträgers (12) vorbereitet zwei Bohrungen (16) aufweist, die jeweils geeignet sind, ein Befestigungsmittel (13) aufzunehmen, und die längs einer Transversalen (T) zur Säule (11) miteinander auf einer Linie liegen.

6. Säule nach Anspruch 5, **dadurch gekennzeichnet, dass** sie eine Sohle (17) und bei jeder Befestigungszone (Z) eines Querträgers (12) einen Klotz (20) umfasst, der insgesamt auf der Sohle (17) vorsteht und an dessen Ende die beiden entsprechenden Bohrungen (16) vorgesehen sind.

7. Säule nach Anspruch 6, **dadurch gekennzeichnet, dass** die verschiedenen Klötze (16), die sie trägt, parallel zu ihrer Längserstreckungsrichtung (D) auf einer Linie liegen.

8. Säule nach Anspruch 7, **dadurch gekennzeichnet, dass** die verschiedenen Klötze (20), die sie trägt, sich längs ihres inneren Randes erstrecken.

9. Säule nach einem der Ansprüche 6 bis 8, **dadurch gekennzeichnet, dass** die verschiedenen Klötze (20), die sie trägt, auf einer Rippe (22) vorstehen, die ihrerseits auf ihrer Sohle (17) vorsteht.

10. Säule nach den Ansprüche 8 und 9 zusammen, **dadurch gekennzeichnet, dass** ihre Rippe (22) einen mittleren Abschnitt (23) aufweist, der sich längs ihres inneren Randes erstreckt und ihre verschiedenen Klötze (20) trägt, sowie zwei Endabschnitte (24), die sich längs ihres äußeren Randes erstrecken und die jeweils durchgängig mit dem mittleren Abschnitt (23) durch einen Verbindungsabschnitt (25) verbunden sind.

11. Säule nach Anspruch 10, **dadurch gekennzeichnet, dass** der Gesamtaußenumriss eines Klotzes (20) in Draufsicht die Form einer Raute mit einer zur Längserstreckung (D) der Säule (11) parallelen Diagonalen und einer zu dieser Längserstreckungsrichtung (D) senkrechten Diagonalen hat.

12. Säule nach Anspruch 11, **dadurch gekennzeichnet, dass** der Gesamtaußenumriss eines Klotzes (20) in Draufsicht im wesentlichen im Gesamtaußenumriss der Rippe (22) enthalten ist.

13. Säule nach einem der Ansprüche 5 bis 12, **dadurch gekennzeichnet, dass** sie bei jeder Befestigungszone (Z) eines Querträgers (12) den entsprechenden Bohrungen (16) zugeordnete Blockiermittel aufweist, die für eine Einrastung des betreffenden Querträgers (12) sowohl in der Längserstrekkungsrichtung (D) der Säule (11) also auch senkrecht zu dieser Längserstreckungsrichtung (D) geeignet sind.

14. Säule nach Anspruch 13, **dadurch gekennzeichnet, dass** die Blockiermittel gemäß der Längserstreckungsrichtung (D) der Säule sich daraus ergeben, dass die Bohrungen (16) auf dem Boden (27) einer Nut (28) vorgesehen sind.

15. Säule nach einem der Ansprüche 13, 14, **dadurch gekennzeichnet, dass** die Blockiermittel senkrecht zur Längserstreckungsrichtung (D) der Säule mindestens eine Nase (32) aufweisen, die bezüglich der Fläche, auf der die Bohrungen (16) vorgesehen sind, vorsteht und sich in einem Abstand von der Fluchtlinie dieser Bohrungen erstreckt.

16. Säule nach einem der Ansprüche 5 bis 15, **dadurch gekennzeichnet, dass** mindestens eine ihrer Querträgerbefestigungszonen (Z) zwei Bohrungen (16) aufweist, die längs einer Transversalen auf einer Linie liegen, und dass mindestens örtlich um mindestens eine dieser Bohrungen (16) herum vorstehend ein Auflagewulst (60) vorgesehen ist.

17. Säule nach einem der Ansprüche 5 bis 16, **dadurch gekennzeichnet, dass** sie aus Kunststoff besteht.

18. Querträger eines Traggestells nach einem der Ansprüche 1 bis 4, **dadurch gekennzeichnet, dass** er an jedem seiner Enden so ausgespart ist, dass er den Durchgang eines Befestigungsmittels (13) gemäß der einen oder der anderen von zwei verschiedenen in Längsrichtung gegeneinander versetzten Anordnungen gestattet.

19. Querträger nach Anspruch 18, **dadurch gekennzeichnet, dass** er an jedem seiner Enden eine Aussparung (38) aufweist, die als Langloch seiner Längserstreckungsrichtung (D') folgend langgestreckt ist.

20. Querträger nach Anspruch 19, **dadurch gekennzeichnet, dass** seine Aussparung (38) mit einem abgewinkelten Rand (39) umrandet ist, der auf seiner Rückseite (40) vorsteht.

21. Querträger nach einem der Ansprüche 19, 20, **dadurch gekennzeichnet, dass** er an jedem seiner Enden zwei Löcher (43) aufweist, die jeweils zu beiden Seiten seiner Aussparung (38) angeordnet sind.

## Claims

1. A support chassis, in particular for electrical equipment, of the kind comprising two uprights (11) and at least two crossbar members (12), each of which is secured to each of the uprights (11) by a fixing means (13), **characterised in that**, for one at least of the uprights (11) the fixing means (13) of one at least of the crossbar members (12) is displaced longitudinally along said crossbar member (12) with respect to the fixing means (13) of one at least of the other crossbar members (12).

2. A support chassis according to claim 1 **characterised in that**, for the same upright (11), the fixing means (13) of the crossbar members (12) are alternatively displaced in one direction and the other, one with respect to the other, from one of the crossbar members (12) to the other.

3. A support chassis according to one of claims I and 2 **characterised in that**, for the same crossbar member (12), the fixing means (13) are installed symmetrically with respect to each other relative to the central plane (M) of the assembly which is perpendicular to the crossbar members (12).

4. A support chassis according to any one of claims 1 to 3 **characterised in that**, for one at least of the crossbar members (12), one at least of the uprights (11) comprises a groove (28) which is elongate perpendicularly to its direction of elongation (D) and with which such a crossbar member (12) is engaged in complementary relationship.

5. An upright of a support chassis according to any one of claims 1 to 4 **characterised in that**, for each fixing zone (Z) of a crossbar member (12), it comprises, in a waiting condition, two piercings (16) which are each capable of receiving a fixing means (13) and which are mutually aligned along a line (T) transverse to the upright (11).

6. An upright according to claim 5 **characterised in that** it comprises a base portion (17) and, for each fixing zone (Z) of a crossbar member (12), a protrusion (20) which projects generally on the base portion (17) and at the end of which are disposed the two corresponding piercings (16).

7. An upright according to claim 6 **characterised in that** the various protrusions (20) that it carries are aligned in parallel relationship with its direction of elongation (D).

8. An upright according to claim 7 **characterised in that** the various protrusions (20) that it carries extend along its internal edge.

9. An upright according to any one of claims 6 to 8 **characterised in that** the various protrusions (20) that it carries project on a rib (22) which itself projects from its base portion (17).

10. An upright according to claims 8 and 9 in combination **characterised in that** the rib (22) that it comprises has a central portion (23) which extends along its internal edge and carries its various protrusions (20), and two end portions (24) which extend along its external edge and which are each respectively continuously connected to the central portion (23) by a connecting portion (25).

11. An upright according to claim 10 **characterised in that** in plan the overall external contour of a protrusion (20) is of a lozenge shape with a diagonal parallel to the direction of elongation (D) of the upright (11) and a diagonal perpendicular to said direction of elongation (D).

12. An upright according to claim 11 **characterised in that** in plan the overall external contour of a protrusion (20) is substantially contained within the overall external contour of the rib (22).

13. An upright according to any one of claims 5 to 12 **characterised in that**, for each fixing zone (Z) of a crossbar member (12), it comprises, in association with the corresponding piercings (16), setting means for indexing of the crossbar member (12) in question, both in the direction of elongation (D) of the upright (11) and perpendicularly to said direction of elongation (D).

14. An upright according to claim 13 **characterised in that**, along its direction of elongation (D), the setting means result from the fact that the piercings (16) are disposed on the bottom (27) of a groove (28).

15. An upright according to either one of claims 13 and 14 **characterised in that**, perpendicularly to its direction of elongation (D), the setting means have at least one lug (32) which, in projecting relationship with respect to the surface on which the piercings (16) are disposed, extends at a spacing from the alignment which said piercings form.

16. An upright according to any one of claims 5 to 15 **characterised in that**, one at least of its crossbar member fixing zones (Z) comprising two piercings (16) in mutually aligned relationship along a transverse line, there is at least locally provided a supporting collar (60) in projecting relationship around one at least of said piercings (16).

17. An upright according to any one of claims 5 to 16 **characterised in that** it is made of synthetic material.

18. A crossbar member of a support chassis according to any one of claims 1 to 4 **characterised in that**, at each of its ends, it is apertured in such a way as to permit the passage of a fixing means (13) according to one or other of two separate fitments which are displaced longitudinally with respect to each other.

19. A crossbar member according to claim 18 **characterised in that**, at each of its ends, it comprises an opening (38) which is elongated in a buttonhole shape in its direction of elongation (D').

20. A crossbar member according to claim 19 **characterised in that** its opening (38) is bordered by a turned-over edge (39) which is in projecting relationship on its rear face (40).

21. A crossbar member according to either one of claims 19 and 20 **characterised in that**, at each of its ends, it comprises two holes (43) each disposed on respective sides of its opening (38).
